# DEMANDE DE BREVET EUROPEEN

(11) **EP 1 770 176 A1**
(43) Date de publication de la demande: **04.04.2007**
(21) Numéro de dépôt: 05109045.4
(22) Date de dépôt: 30.09.2005
(51) Int. Cl.: C22C 1/04, B22F 1/00, B22F 3/00

(54) **Granule pour l'impression à trois dimensions**

(71) Demandeur: Haute Ecole Valaisanne, 1950 Sion 2 (CH)
(72) Inventeur: Carreno-Morelli, Efrain, 1950, Sion (CH); Martinerie, Sébastien, 1950, Sion (CH); Bidaux, Jacques-Eric, 1971, Grimisuat (CH)
(74) Mandataire: GLN

(57) **Abrégé**

L'invention concerne un granulé destiné à l'élaboration d'une pièce mécanique par un procédé de mise en forme, et formé d'une pluralité de grains de poudre et d'un liant, maintenant ensemble les grains et soluble dans un solvant. Les grains sont constitués des éléments métalliques de base d'un alliage à mémoire de forme, et, au moins à l'échelle statistique, dans les proportions de cet alliage à mémoire de forme.

L'invention concerne également un procédé d'impression à trois dimensions utilisant un tel granulé.

## Description

La présente invention se rapporte au domaine des matériaux. Plus précisément, elle concerne un granulé destiné à l'élaboration d'un objet par divers procédés de mise en forme, et formé à partir de grains de poudres métalliques et de liant. La présente invention concerne également un procédé de fabrication d'un objet utilisant un tel granulé.

Les poudres métalliques sont utilisées depuis de nombreuses années en métallurgie des poudres, pour l'élaboration de pièces complexes. Les techniques associées, bien connues de l'homme de métier, comportent généralement une étape de compactage, suivie d'une étape de frittage à une température inférieure à la température de fusion du métal. Parmi elles, on peut citer le pressage à froid, le pressage à chaud, le frittage laser et le moulage par injection de poudres métalliques (MIM). Les matériaux utilisés sont principalement les aciers, les métaux réfractaires, les alliages durcis par dispersion d'oxyde, les métaux durs et les composites métal-céramique.

Dans certains cas, la poudre peut avantageusement être remplacée par un granulé formé d'une pluralité de grains de poudre agglomérés ensemble à l'aide d'un liant. En effet, les granulés ont généralement une meilleure densité volumique que la poudre dont ils sont issus. En outre, ils génèrent moins de poussière et s'écoulent de façon plus fluide. Ils sont, par exemple, utilisés dans le pressage à froid, où ils permettent de réduire la friction des particules contre les parois du moule, le liant agissant comme un lubrifiant. Les granulés sont également employés dans la technique du frittage laser, qui consiste à fondre localement le liant pour former progressivement une pièce, comme décrit dans le brevet US 5382308.

Plus récemment, des granulés ont été développés pour leur utilisation dans la technique d'impression à trois dimensions. De tels granulés sont décrits dans la demande de brevet EP 1513669. De son côté, le procédé d'impression à trois dimensions est exposé dans le brevet US 5204055. Il consiste à étaler une couche de poudre, lier cette poudre sélectivement à l'aide d'un liant apporté sous forme de fines gouttelettes, et répéter ces opérations jusqu'à l'obtention d'une pièce mécanique. Cette technique se prête particulièrement bien à l'élaboration de prototypes puisqu'elle est très flexible et ne nécessite pas l'emploi d'un moule. En outre, des pièces de forme très complexe peuvent être élaborées.

L'utilisation d'un granulé formé de grains de poudre enrobés d'un liant est particulièrement avantageuse pour l'impression à trois dimensions, qu'elle permet de simplifier considérablement. En effet, grâce au granulé, il suffit de dispenser sélectivement un solvant, et non plus un liant, afin d'agglomérer localement les grains de poudre. Le solvant étant plus fluide que le liant, les moyens destinés à projeter les fines gouttelettes de liquide peuvent être considérablement simplifiés.

Les premiers essais d'impression à trois dimensions à base de granulé montrent la supériorité de cette technique sur la technique initiale à base de simple poudre. Les pièces élaborées s'avèrent plus denses et plus résistantes, comme exposé dans l'article de E. Carreno-Morelli et S. Martinerie (Proceedings of Euro PM2005, 2-5 Octobre 2005, Prague). Les essais se limitent toutefois à l'utilisation de granulés à base d'aciers, pré-alliés ou non, dont les propriétés mécaniques sont bien établies.

La présente invention propose un nouveau type de granulé, destiné à divers procédés de fabrication de pièces complexes possédant des propriétés mécaniques plus intéressantes que celles obtenues au moyen des granulés de l'art antérieur.

Plus précisément, l'invention concerne un granulé destiné à l'élaboration d'une pièce mécanique par un procédé de mise en forme, et formé d'une pluralité de grains de poudre et d'un liant, maintenant ensemble les grains et soluble dans un solvant. Selon l'invention les grains sont constitués des éléments métalliques de base d'un alliage à mémoire de forme et, au moins à l'échelle statistique, dans les proportions de cet alliage à mémoire de forme.

L'invention concerne également un procédé d'élaboration d'une pièce métallique complexe comportant les étapes suivantes :
- déposer sur un substrat une première mince couche de granulés selon l'invention,
- dispenser sélectivement sur cette couche un solvant en fines gouttelettes de manière à lier localement les granulés, pour former une première strate de la pièce,
- déposer une deuxième mince couche de granulés sur la première couche,
- dispenser sélectivement sur cette deuxième couche un solvant en fines gouttelettes afin de lier localement les granulés pour former une deuxième strate de la pièce, au moins partiellement liée à la première strate,
- réitérer les opérations de formation d'une couche de granulés et de liaison des granulés à l'aide du solvant jusqu'à obtention de la pièce désirée.

L'invention sera mieux comprise à la lumière de la description qui suit, faite en référence au dessin annexé, dans lequel :
- les figures 1 et 2 représentent deux types de granulé selon l'invention,
- la figure 3 est une photo prise au microscope électronique à balayage d'un tel granulé, et
- la figure 4 illustre schématiquement les diverses étapes de formation d'une pièce par impression à trois dimensions à partir de ce granulé.

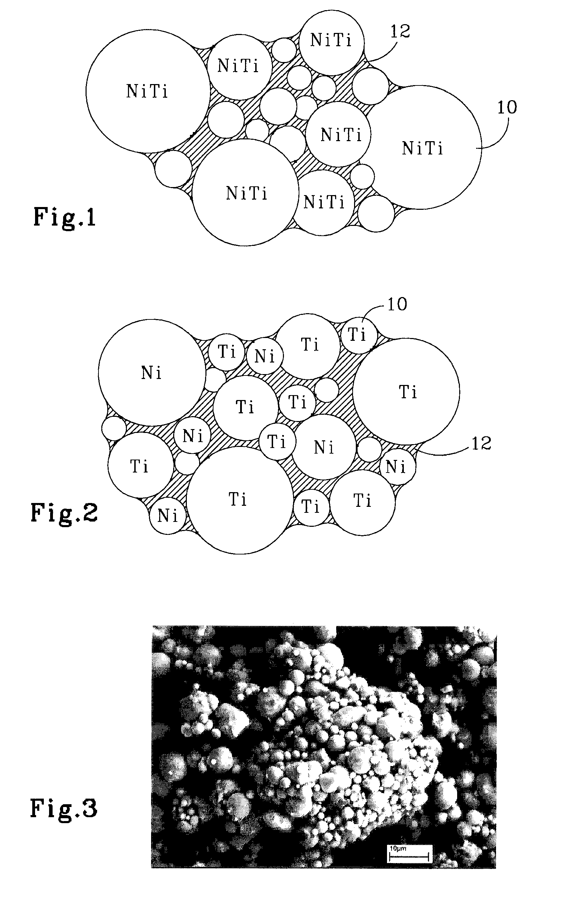

Le granulé de la figure 1 est formé, classiquement de grains de poudre 10, et d'un liant 12 occupant totalement ou partiellement les espaces entre les grains 10, qui sont ainsi maintenues ensemble. Ces grains 10, pouvant être des sphéroïdes ou des particules de forme irrégulière, ont une taille comprise entre 0.1 et 100 microns. Le liant est un polymère soluble dans l'alcool appelé Polybutyral de vinyle (PVB). Bien entendu, tout autre type de liant organique, soluble dans les alcools, dans l'eau ou dans les cétones, tel que le polyacétate de vinyle (PVAC) ou le polyalcool vinylique (PVAL), pourrait être utilisé.

Le procédé de fabrication d'un tel granulé est bien connu de l'homme de métier. Une description en est donnée dans l'ouvrage 'Powder Metallurgy: Processing and Materials', de W. Schatt et K.-P. Wieters, European Powder Metallurgy Association EPMA, Shrewsbury, 1997, p.61.

Selon l'invention, les grains de poudre 10 utilisés comme matériau de base du granulé sont formés individuellement d'un alliage à base de nickel-titane, dans les proportions d'un alliage à mémoire de forme, c'est à dire dans un pourcentage atomique de nickel compris entre 49 et 51. La poudre de base est dite pré-alliée. En variante, les grains de poudre 10 peuvent être formés d'un alliage à mémoire de forme à base de cuivre, à base de fer, à base de titane-niobium ou à base de métaux précieux tels que l'or et l'argent. On citera, par exemple, l'alliage cuivre - aluminium - nickel contenant un pourcentage atomique d'aluminium et de nickel compris respectivement entre 28 et 29, et entre 3 et 4.5, ou l'alliage or - cadmium contenant un pourcentage atomique de cadmium compris entre 46.5 et 48. Pour plus d'informations sur la composition des alliages à mémoire de forme, on se référera à l'ouvrage de K. Otsuka et C.M. Wayman, intitulé 'Shape Memory Materials', Cambridge university Press, 2002.

Le granulé de la figure 2 diffère du granulé de la figure 1, uniquement en ce que les grains de poudre 10 sont constitués individuellement de titane ou de nickel. Autrement dit, la poudre de base est un mélange de poudre de titane et de poudre de nickel. A l'échelle d'un grand nombre de grains, c'est à dire à l'échelle statistique, les proportions de nickel et de titane du mélange sont celles d'un alliage à mémoire de forme. En variante, il est possible d'utiliser, par exemple, un mélange de poudres de cuivre, d'aluminium et de nickel dans les proportions indiquées précédemment, ou tout autre mélange de poudres d'éléments métalliques dans les proportions d'un alliage à mémoire de forme.

Sur la figure 3, le granulé selon l'invention est visualisé, à l'aide d'un microscope électronique à balayage, sur fond d'autres granulés. Sa taille est typiquement de 50 microns. On évalue le nombre de grains au sein du granulé à plusieurs centaines environ.

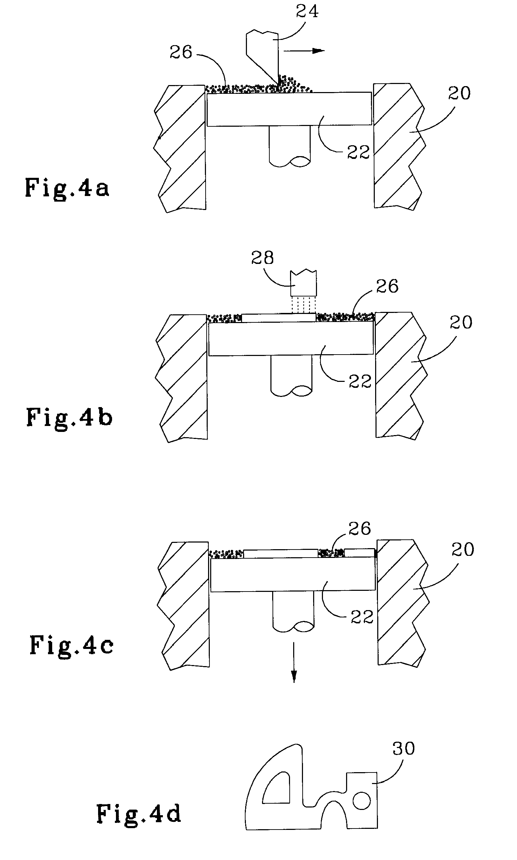

On se référera maintenant aux figures 4a à 4d qui illustrent les principales étapes d'un procédé utilisant le granulé selon l'invention pour l'élaboration d'une pièce complexe. Il s'agit, en l'espèce, d'un procédé d'impression à trois dimensions avec jet de solvant. La figure 4a montre schématiquement un bâti 20, formant des parois verticales, et une table 22 formant un substrat, mobile en hauteur à l'intérieur du bâti 20. Un racloir 24 est déplacé horizontalement en surface de la table 22, de façon à étaler une première couche 26 de granulés d'épaisseur comprise entre 50 et 200 microns.

Sur la figure 4b, une tête d'impression jet d'encre 28 est déplacée horizontalement, dispensant sélectivement des gouttelettes de solvant, sur les zones de la couche 26 à solidifier, afin de former une première strate de la pièce désirée. Dans un premier temps, le liant 12 contenu dans les granulés se dissout localement, se répandant entre les granulés. Dans un deuxième temps, le solvant s'évapore, agglomérant ensemble un amas de granulés.

Puis, la figure 4c montre que la table 22 descend d'une hauteur correspondant sensiblement à l'épaisseur d'une couche 26 de granulés.

Ensuite, les étapes 4a, 4b, et 4c se répètent pour former, strate par strate, chaque strate étant partiellement ou totalement liée à la strate précédante, une pièce complexe en nickel titane 30, telle qu'illustrée en figure 4d.

La pièce 30 ainsi réalisée subit ensuite une opération de frittage destinée à éliminer le liant 12 et créer des liaisons chimiques entre grains 10, sans fusion du métal. La forme de la pièce 30 est ainsi conservée. Sa densité est de l'ordre de 6.15g/cm3, soit 95.4% de la densité théorique de l'alliage nickel titane utilisé. En outre, on observe que la pièce 30 présente, sous l'effet de la température, un effet mémoire de forme, tendant à la faire revenir à sa forme initiale après déformation. Cet effet est connu pour des pièces simples, telles que des spirales ou des agrafes, obtenues par des techniques traditionnelles.

Il est, en revanche, nouveau pour des pièces complexes, difficilement réalisables par usinage, et pas encore réalisées par d'autres techniques de la métallurgie des poudres.

On notera que de la poudre d'hydrure de titane peut être utilisée en lieu et place de la poudre de titane, pour la fabrication du granulé de nickel-titane non pré-allié. Les proportions du mélange de poudre d'hydrure de titane et de poudre de nickel sont telles que les pourcentages atomiques d'un alliage à mémoire de forme sont respectés. Lorsque de l'hydrure de titane est employé pour la fabrication du granulé, le frittage de la pièce formée à partir de ce granulé est précédé d'un traitement thermique de déshydrogénation. Les poudres d'hydrure de titane offrent l'avantage d'être beaucoup moins réactives que celles de titane et donc plus faciles à manipuler sans danger même lorsque leur taille est très fine. Or, plus la taille des poudres est fine plus les pièces sont précises.

## Revendications

1. Granulé destiné à l'élaboration d'une pièce mécanique par un procédé de mise en forme, et formé d'une pluralité de grains de poudre (10) et d'un liant (12), maintenant ensemble lesdits grains (10) et soluble dans un solvant, **caractérisé en ce que** lesdits grains (10) contiennent les éléments métalliques de base d'un alliage à mémoire de forme, et, au moins à l'échelle statistique, dans les pourcentages atomiques dudit alliage à mémoire de forme.

2. Granulé selon la revendication 1, **caractérisé en ce que** chaque grain (10) est constitué des éléments métalliques de base d'un alliage à mémoire de forme, dans les pourcentages atomiques dudit alliage à mémoire de forme.

3. Granulé selon la revendication 1, **caractérisé en ce que** chaque grain (10) est constitué d'un élément métallique de base d'un alliage à mémoire de forme, lesdits grains (10) comportant, à l'échelle statistique, tous les éléments d'un alliage à mémoire de forme, dans les pourcentages atomiques dudit alliage à mémoire de forme.

4. Granulé selon la revendication 1, **caractérisé en ce qu'**une portion au moins desdits grains (10) sont constitués, individuellement d'un hydrure de métal, l'autre portion desdits grains étant constitués d'un deuxième métal, lesdits métaux étant des éléments de base d'un alliage à mémoire de forme et lesdits grains (10) comportant, à l'échelle statistique, tous les éléments d'un alliage à mémoire de forme, dans les pourcentages atomiques dudit alliage à mémoire de forme.

5. Granulé selon l'une des revendications 1 à 4, **caractérisé en ce que** ledit alliage à mémoire de forme appartient à la famille des alliages à base de Nickel-Titane.

6. Granulé selon l'une des revendications 1 à 3, **caractérisé en ce que** ledit alliage à mémoire de forme appartient à la famille des alliages à base de cuivre.

7. Granulé selon l'une des revendications 1 à 3, **caractérisé en ce que** ledit alliage à mémoire de forme appartient à la famille des alliages à base de fer.

8. Granulé selon l'une des revendications 1 à 4, **caractérisé en ce que** ledit alliage à mémoire de forme appartient à la famille des alliages à base de Titane-Niobium.

9. Granulé selon l'une des revendications 1 à 3, **caractérisé en ce que** ledit alliage à mémoire de forme appartient à la famille des alliages à base d'or et d'argent.

10. Granulé selon l'une des revendications 1 à 9, **caractérisé en ce que** ledit liant est le polybutyral de vinyle.

11. Granulé selon la revendication 10, **caractérisé en ce que** ledit solvant est un alcool.

12. Granulé selon l'une des revendications 1 à 11, **caractérisé en ce que** ledit procédé de mise en forme est l'impression à trois dimensions.

13. Granulé selon l'une des revendications 1 à 11, **caractérisé en ce que** ledit procédé de mise en forme est le frittage laser.

14. Procédé d'élaboration d'une pièce métallique (30) complexe comportant les étapes suivantes :
- déposer sur un substrat (22) une première mince couche de granulés (26) selon l'une des revendications 1 à 8,
- dispenser sélectivement sur cette couche (26) un solvant en fines gouttelettes de manière à lier localement les granulés, pour former une première strate de ladite pièce (30),
- déposer une deuxième mince couche de granulés sur ladite première couche (26),
- dispenser sélectivement sur cette deuxième couche un solvant en fines gouttelettes afin de lier localement les granulés pour former une deuxième strate de ladite pièce (30), au moins partiellement liée à la première strate,
- réitérer les opérations de formation d'une couche de granulés et de liaison des granulés à l'aide dudit solvant jusqu'à obtention de la pièce désirée.
